# EUROPÄISCHE PATENTANMELDUNG

(11) **EP 1 906 374 A2**
(43) Veröffentlichungstag der Anmeldung: **02.04.2008**
(21) Anmeldenummer: 07018042.7
(22) Anmeldetag: 14.09.2007
(51) Int. Cl.: G08G 1/0962, G01S 5/14

(54) **Ortungseinrichtung für ein Kraftfahrzeug**

(30) Priorität: 26.09.2006 DE 102006045417
(71) Anmelder: GM Global Technology Operations, Inc., Detroit, MI 48265-3000 (US)
(72) Erfinder: Wagner, Nikolas, 65345 Eltville-Rauenthal (DE)
(74) Vertreter: Daniel, Ulrich W.P.

(57) **Zusammenfassung**

Die Erfindung bezieht sich auf eine Ortungseinrichtung für ein Kraftfahrzeug zur Ermittlung des geographischen Bereichs, in dem sich das Kraftfahrzeug (1) befindet. Mittels einer elektronischen Kamera (12) werden Bilder der Umgebung des Kraftfahrzeugs (1) erfasst, aus denen aktuelle Strukturen mittels einer Mustererkennung isoliert werden. Die aktuellen Strukturen (15, 16, 17, 18) werden mit gespeicherten Strukturen (20, 21, 22, 23) verglichen, die jeweils mit bestimmten geographischen Bereichen verknüpft sind. Mittels einer Ähnlichkeitsbetrachtung wird daraus der wahrscheinlichste geographische Bereich ermittelt, an dem sich das Fahrzeug aktuell befindet.

## Beschreibung

Die Erfindung liegt auf dem Gebiet der Ortungseinrichtungen für Kraftfahrzeuge, das heißt die Einrichtungen, die die Bestimmung eines geographischen Bereichs erlauben, an dem sich ein Fahrzeug aktuell befindet.

Grundsätzlich geht die Entwicklung in der Automobiltechnik dahin, unter anderem Sicherheit und Fahrkomfort von zu befördernden Personen durch verschiedene automatische Systeme zu erhöhen. Zu diesen gehören unter anderem auch die Fahrassistenzsysteme, wie beispielsweise Tempomat, Abstandswarner, Mindestabstandshalter, Lane-Departure-Systeme, Kollisionswarneinrichtungen und automatische Fahrwegbeleuchtungssysteme sowie Verkehrszeichenerfassungssysteme.

Grundsätzlich sind viele dieser Fahrassistenten bei einer sinnvollen und regelgerechten Unterstützung des Fahrers darauf angewiesen, dass die aktuell geltenden Vorschriften und Bedingungen für das Fahren in der aktuellen Umgebung bekannt sind.

Beispielsweise können für verschiedene Regionen/Staaten unterschiedliche Bedingungen wie Grenzgeschwindigkeiten, Mindestabstände, Einstellung der Fahrzeugbeleuchtung und dergleichen vorgeschrieben sein. Auch das automatischen Erkennen von bestimmten Fahrsituationen kann vom Bekanntsein des Aufenthaltsortes abhängig sein.

Um den Fahrzeuginsassen nicht zuzumuten, jeweils einen Aufenthaltsort in ein Assistenzsystem einzugeben, hat sich die vorliegende Erfindung die Aufgabe gestellt, mit möglichst geringem Aufwand eine automatische Ortsermittlung für den Aufenthaltsort eines Fahrzeugs zu schaffen. Dabei soll der konstruktive Aufwand sowie der Kostenaufwand möglichst minimiert werden.

Die Lösung der Aufgabe gelingt mit den Merkmalen des Patentanspruchs 1 bezogen auf eine Ortungseinrichtung sowie mit einem Verfahren gemäß dem Anspruch 11.

Gemäß der Erfindung weist die Ortungseinrichtung eine elektronische Kamera auf, die Bilder der Umgebung des Kraftfahrzeugs erfasst. Diese kann typisch an der Windschutzscheibe angeordnet und beispielsweise am Rückspiegelhalter befestigt und nach vorne in Fahrtrichtung des Fahrzeugs ausgerichtet sein. Es sind jedoch auch andere Ausrichtungen möglich. Besonders häufig werden jedoch Kameras mit einer Ausrichtung nach vorne auch durch geläufige Assistenzsysteme benötigt, so dass eine derartige Kamera, die ohnehin für ein Assistenzsystem vorhanden ist, auch durch die Ortungseinrichtung genutzt werden kann. Dadurch reduziert sich der Hardware-Aufwand für die erfindungsgemäße Einrichtung.

Diese weist außerdem eine Mustererkennungseinrichtung auf, die aus den aufgenommenen Bildern aktuelle Strukturen ermittelt. Beispielsweise können Verkehrsschilder oder Fahrbahnmarkierungen erkannt werden, die für bestimmte Regionen oder Länder typisch sind. Es ist auch denkbar, dass zur Erkennung von Ländern mit Linksverkehr ausgewertet wird, ob der entgegenkommende Verkehr auf der rechten oder linken Seite passiert.

Weiterhin können Orts- und Richtungshinweisschilder ausgewertet werden, die ebenfalls geographisch typische Formen haben können.

Auch die Auswertung von Kraftfahrzeugkennzeichen anderer Verkehrsteilnehmer kann sinnvoll sein, da auch diese einen Rückschluss auf die Herkunft aus bestimmten Regionen/Staaten erlauben und da meistens der Anteil der Fahrzeuge, die von lokal ansässigen Einwohnern gefahren werden, an einem aktuellen Aufenthaltsort den größten Anteil im Straßenverkehr ausmacht.

Wenn die Kraftfahrzeugkennzeichen sich nicht in Form und Farbe zuordnen lassen, so kann auch alternativ oder zusätzlich die Zahlen- und Buchstabenkombination erfasst und gelesen werden und es können mittels einer hinterlegten Datenbank Rückschlüsse gezogen werden.

Außerdem kann in der Speichereinrichtung eine Liste von Ortsnamen gespeichert sein, die der Ortungseinrichtung bei der Zuordnung von Ortshinweisschildern durch Worterkennung und entsprechenden Vergleich mit der hinterlegten Liste eine Ortsermittlung erlaubt.

Eine Zuordnungseinrichtung sorgt für einen Vergleich der erkannten aktuellen Strukturen mit den in der Speichereinrichtung gespeicherten bekannten Strukturen und ordnet jeder ermittelten aktuellen Struktur eine oder mehrere bekannte Strukturen zu, die die größte Ähnlichkeit mit der aktuellen Struktur aufweisen.

Diesen bekannten Strukturen sind in der Ortungseinrichtung geographische Bereiche zugeordnet, so dass durch den Vergleich auch den aktuell ermittelten Strukturen geographische Bereiche mit aus den Ähnlichkeitswerten berechneten Wahrscheinlichkeitswerten zugeordnet werden können.

Dies geschieht vorteilhaft mittels eines Expertensystems, das in die Zuordnungseinrichtung integriert ist. In dem Expertensystem sind Erfahrungsdaten hinterlegt, aufgrund deren die Zuordnung eines geographischen Bereichs zuverlässig gelingt. Beispielsweise können vorteilhaft verschiedene Klassen von Strukturen vorhanden sein, die mit unterschiedlicher Zuverlässigkeit erkannt werden können und entsprechend unterschiedlich gewichtet werden, wenn aus den ermittelten Übereinstimmungen ein wahrscheinlichster geographischer Bereich ermittelt wird. Wenn beispielsweise aus dem Vergleich verschiedener Strukturen mit bekannten Daten unterschiedliche in Fragen kommende geographische Bereiche ermittelt werden, so kann durch die Gewichtung die Struktur, die erfahrungsgemäß die zuverlässigste Zuordnung erlaubt, priorisiert oder wenigstens mit einer höheren Gewichtung in eine Verrechung der Daten einbezogen werden.

Eine weitere vorteilhafte Ausgestaltung der Erfindung sieht vor, dass die Zuordnungseinrichtung ein neuronales Netz aufweist.

Das neuronale Netz vereinigt in sich dann die gespeicherten bekannten Daten über Strukturen mit entsprechenden Gewichtungen von Wahrscheinlichkeiten und den Algorithmen für die Zuordnung von aktuellen Strukturen zu bekannten Strukturen. Für das zuverlässige Funktionieren des neuronalen Netzes kommt es auf ein gutes Training des Netzes mittels bekannter Daten an. Beispielsweise können eine Vielzahl von bekannten Bildern in das neuronale Netz eingespeist und diesen jeweils ein zutreffender geographischer Bereich zugeordnet werden.

Das neuronale Netz kann außerdem beispielsweise durch einen parallelen Betrieb mit einem GPS-System, das ebenfalls die Bestimmung eines geographischen Ortes ermöglicht, eine Zeit lang trainiert werden. Beispielsweise kann dies bei einem Prototyp geschehen, der später vervielfältigt werden kann.

Ist mittels des Ortungssystems ein geographischer Bereich ermittelt worden, so können die übrigen Fahrassistenzsysteme auf diese Information zugreifen und sich entsprechend einstellen.

Es kann auch vorgesehen sein, dass der ermittelte geographische Bereich über eine optische Anzeige dem Fahrer angezeigt und durch diesem quittiert wird, um eine zuverlässigere Zuordnung zu gewährleisten. Trotz der notwendigen Quittierung wäre dann zumindest der Aufwand des aktiven Eingebens mittels einer Tastatur eingespart.

Das erfindungsgemäße Verfahren zum Betrieb einer Ortungseinrichtung sieht die Erfassung von Bildern der Fahrumgebung vor sowie die Zuordnung von aktuellen Strukturen zu den Bildern durch eine Mustererkennung, den Vergleich mit gespeicherten Strukturen und die Zuordnung von Ähnlichkeitswerten zwischen aktuellen und gespeicherten Strukturen sowie die Ermittlung von in Frage kommenden geographischen Bereichen aus den Ähnlichkeitswerten.

Dabei kann außer den geschilderten Wahrscheinlichkeitsberechnungen unter Berücksichtigung der Ähnlichkeiten auch die Information berücksichtigt werden, welcher geographische Bereich durch die Ortungseinrichtung zuletzt ermittelt wurde.

Für den Fall, dass die Ortungseinrichtung dauernd betrieben wird, kann so die Anzahl der in Frage kommenden geographischen Bereiche dadurch reduziert werden, dass von einem früher ermittelten geographischen Bereich aus nur unmittelbar benachbarte andere geographische Bereiche direkt erreichbar sind.

Im folgenden wird die Erfindung anhand eines Ausführungsbeispiels in einer Zeichnung gezeigt und nachfolgend beschrieben.
Dabei zeigt
- Fig. 1: ein Fahrzeug in einer typischen Fahrumgebung mit einer nach vorn in Fahrtrichtung gerichteten Kamera,
- Fig. 2: den schematischen Aufbau der Ortungseinrichtung,
- Fig. 3: ein Ablaufdiagramm für die Bestimmung eines geographischen Bereichs.

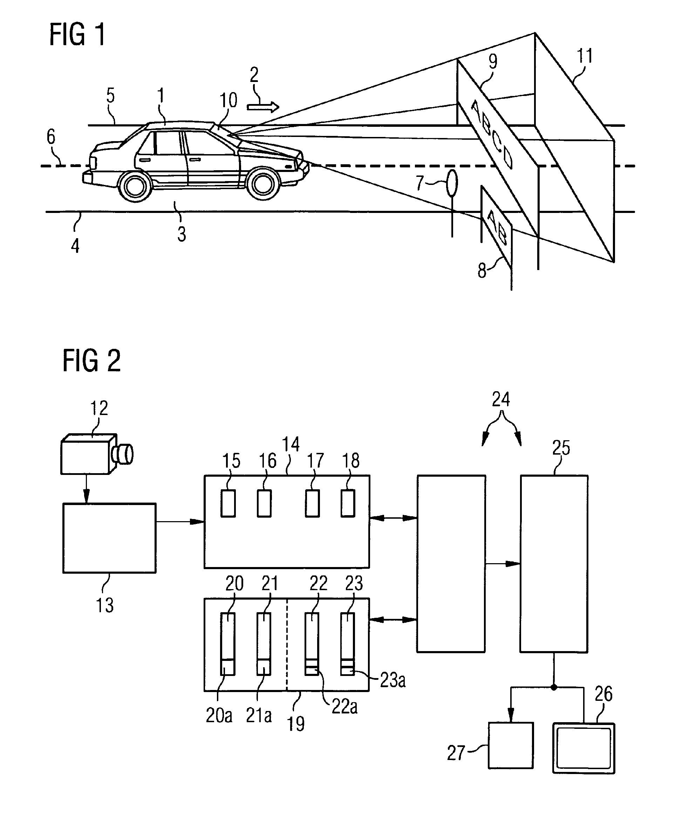

Figur 1 zeigt ein Fahrzeug 1, das sich in Richtung des Pfeils 2 auf einer Fahrbahn 3 fortbewegt. Die Fahrbahn ist seitlich durch Fahrbahnmarkierungen 4, 5, sowie in der Mitte zwischen den Fahrspuren durch eine gestrichelte Mittellinie 6 gekennzeichnet.

Schematisch sind außer den genannten Fahrbahnmarkierungen noch ein Verkehrszeichen 7, ein Ortseingangsschild 8 sowie ein Richtungshinweisschild 9 dargestellt.

An der Windschutzscheibe 10 des Kraftfahrzeugs 1 ist eine nicht näher erkennbare Kamera angeordnet, die am Rückspiegelhalter befestigt und nach vorn in Richtung des Pfeils 2 gerichtet ist. Der Erfassungsbereich der Kamera ist schematisch dargestellt und mit 11 bezeichnet.

Weitere Strukturen, die nicht dargestellt sind, aber erkannt werden und für die Zuordnung eines geographischen Bereichs berücksichtigt werden können, sind beispielsweise die Gestaltung von Kreuzungs- und Einmündungsbereichen, Verkehrsampeln, entgegenkommende Fahrzeuge sowie auch die Randbebauung am Fahrbahnrand.

Figur 2 stellt ebenfalls schematisch den Aufbau der Ortungseinrichtung dar mit einer Kamera 12, die Bilder aufnimmt und diese zu einer Mustererkennungseinrichtung 13 leitet.

Dort wird jedes Bild auf erkennbare Strukturen untersucht wie beispielsweise Verkehrsschilder, Orts- und Richtungshinweisschilder, Fahrbahnmarkierungen und so weiter und diese werden als Strukturen isoliert und in einer Kurzspeichereinrichtung 14 gespeichert.

Die gespeicherten Strukturen 15, 16, 17, 18 können datenreduziert in der Kurzspeichereinrichtung 14 hinterlegt werden.

Es ist eine Speichereinrichtung 19 vorgesehen, in der bekannte Strukturen 20, 21, 22, 23 mit einer bekannten regionalen Zuordnung 20a, 21a, 22a, 23a hinterlegt sind.

In der Zuordnungseinrichtung 24 werden zunächst die erfassten bekannten Strukturen 15, 16, 17, 18 mit den gespeicherten Strukturen 20, 21, 22, 23 verglichen und es werden jeweils Ähnlichkeitswerte ermittelt und gespeichert. Aufgrund der Ähnlichkeitswerte können jeder der Strukturen 15, 16, 17, 18 bereits eine oder mehrere Strukturen aus dem Speicher 19 mit gewissen Wahrscheinlichkeiten zugeordnet werden. Sind die entsprechenden Wahrscheinlichkeiten sehr gering oder bestehen für die Zuordnung einer aktuellen Struktur zu verschiedenen gespeicherten Strukturen gleiche Wahrscheinlichkeiten, so kann die entsprechende aktuelle Struktur bei der Auswertung auch weggelassen werden.

Da den gespeicherten Strukturen 20, 21, 22, 23 bereits mögliche geographische Bereiche zugeordnet sind, kann auch jeder aktuellen erfassten Struktur 15, 16, 17, 18 mit gewissen Wahrscheinlichkeiten ein geographischer Bereich oder mehrere geographische Bereiche zugeordnet werden.

In der Auswertungseinrichtung 25 der Zuordnungseinrichtung 24 können diese Ergebnisse, insbesondere dann, wenn durch Zuordnung der einzelnen Strukturen verschiedene geographische Bereiche in Frage kommen, miteinander verrechnet werden.

Dabei können die Gewichtungen der verschiedenen Strukturen unterschiedlich sein, je nach der Zuverlässigkeit beziehungsweise Zuordnung der entsprechenden Strukturen. Dieser Gewichtungsfaktor wird noch multipliziert mit den Ähnlichkeitskennwerten, die bei der Zuordnung der einzelnen aktuellen Strukturen zu gespeicherten Strukturen ermittelt worden sind und aufgrund dieser Daten wird ein wahrscheinlichster geographischer Bereich ermittelt. Dieser wird an eine Anzeigeeinrichtung 26 sowie an weitere Assistenzsysteme 27 in dem Fahrzeug übermittelt.

Es kann auch vorgesehen sein, dass vor einer Übermittlung an andere Assistenzsysteme der ermittelte geographische Bereich in der Anzeigeeinrichtung 26 angezeigt wird und vom Fahrer quittiert werden muss.

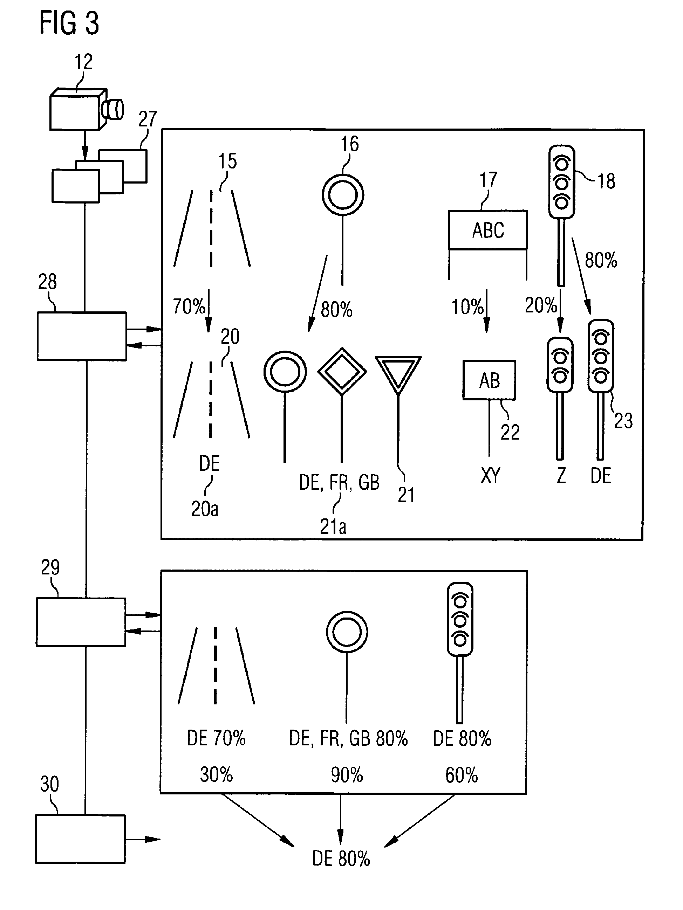

Figur 3 zeigt schematisch das Vorgehen beim Betrieb der Ortungseinrichtung.

Zunächst werden mittels der Kamera 12 ein oder mehrere Bilder 27 aufgenommen. In einem zweiten Schritt 28 werden die erkennbaren Strukturen 15, 16, 17, 18 isoliert und mit entsprechenden gespeicherten Strukturen 20, 21, 22, 23 verglichen. Dabei wird ein Ähnlichkeitsfaktor festgelegt, der ausdrückt, mit welcher Wahrscheinlichkeit das entsprechende gespeicherte Zeichen erkannt worden ist.

In der Figur ist außerdem erkennbar, dass den gespeicherten Strukturen 20, 21, 22, 23 auch bereits Ortsangaben 20a, 21a u.s.w. zugeordnet sind. In dem gezeigten Beispiel bedeutet dies, dass die Ausgestaltung und Kennzeichnung der Fahrbahn so wie sie erfasst wird als Struktur 15, mit einem Standardbild 20, wie es für Deutschland typisch ist, zu 70% übereinstimmt. Das Schild, das als Struktur 16 erkannt worden ist, stimmt zu 80% mit einem gespeicherten Schild 21 überein, das für Deutschland, Frankreich und Großbritannien so aussieht, wie dargestellt.

In einem weiteren Schritt werden die auf diese Weise zugeordneten wahrscheinlichen Ortsangaben für jede Struktur zu einem Gesamtbild zusammengefasst, was insbesondere dann wichtig ist, wenn die einzelnen Strukturen auf unterschiedliche Länder/Regionen hinweisen. In dem gezeigten Beispiel wird das Ergebnis des Vergleichs der Fahrbahnmarkierungen mit 30% wesentlich geringer gewichtet als das Ergebnis eines Vergleichs von erkannten Verkehrsschildern (90%).

Im Einsatzfall werden oft nur eine oder wenige der hier dargestellten Strukturen zum Vergleich zur Verfügung stehen.

Die Teilergebnisse werden mit den Übereinstimmungs-oder Ähnlichkeitskennwerten der einzelnen Strukturen und den Gewichtungen in einem letzten Schritt 30 zusammengefasst und angezeigt.

Auf diese Weise erlaubt das erfindungsgemäße Verfahren ohne zusätzlichen Hardware-Aufwand ausschließlich durch eine Beurteilung des optischen Eindrucks der Fahrumgebung die Zuordnung eines geographischen Bereichs und damit die Bestimmung, wo das Fahrzeug sich aktuell befindet.

### Bezugszeichenliste

- 1: Fahrzeug
- 2: Bewegungsrichtung des Fahrzeug
- 3: Fahrbahn
- 4, 5: Fahrtbahnmarkierungen
- 6: Fahrbahn- Mittellinie
- 7: Verkehrszeichen
- 8: Ortseingangsschild
- 9: Richtungshinweisschild
- 10: Windschutzscheibe
- 11: Erfassungsbereich der Kamera
- 12: Kamera
- 13: Mustererkennungseinrichtung
- 14: Kurzspeichereinrichtung
- 15, 16, 17, 18: gespeicherte Strukturen
- 19: Speichereinrichtung
- 20, 21, 22, 23: bekannte Strukturen
- 20a, 21a, 22a, 23a: Zuordnung für die bekannten Strukturen
- 24: Zuordnungseinrichtung
- 25: Auswertungseinrichtung
- 26: Anzeigeeinrichtung
- 27: weitere Assistenzsysteme
- 30: Zusammenfassung und Anzeige von Teilergebnissen

## Patentansprüche

1. Ortungseinrichtung für ein Kraftfahrzeug (1) zur Ermittlung des geographischen Bereichs in dem sich das Kraftfahrzeug befindet, mit
einer elektronischen Kamera (12), die Bilder (27) der Umgebung des Kraftfahrzeugs umfasst,
einer Mustererkennungseinrichtung (13), die aus den Bildern aktuelle Strukturen (14,15,16,17,18) ermittelt,
einer Speichereinrichtung, in der bekannte Strukturen (20,21,22,23) gespeichert sind sowie einer Zuordnungseinrichtung, die durch Vergleich der ermittelten aktuellen Strukturen mit bekannten Strukturen (20,21,22,23) einen geographischen Bereich ermittelt, in dem sich das Fahrzeug befindet.

2. Ortungseinrichtung nach Anspruch 1,
**dadurch gekennzeichnet,**
**dass** die Zuordnungseinrichtung (24) ein Expertensystem aufweist.

3. Ortungseinrichtung nach Anspruch 1,
**dadurch gekennzeichnet,**
**dass** die Zuordnungseinrichtung (24) ein neuronales Netz aufweist.

4. Ortungseinrichtung nach Anspruch 2,
**dadurch gekennzeichnet,**
**dass** in der Speichereinrichtung (19) Strukturen (20,21,22,23) gespeichert sind, deren Zuordnung (20a,21a,22a,23a) zu einem geographischen Bereich hinterlegt ist.

5. Ortungseinrichtung nach Anspruch 4,
**dadurch gekennzeichnet,**
**dass** die Strukturen nach Klassen geordnet sind, die bei der Zuordnung eines geographischen Bereichs unterschiedliche Gewichtungen aufweisen.

6. Ortungseinrichtung nach Anspruch 5,
**dadurch gekennzeichnet,**
**dass** unter den Klassen die Verkehrsschilder (7) sind.

7. Ortungseinrichtung nach Anspruch 5 oder 6,
**dadurch gekennzeichnet,**
**dass** unter den Klassen die Fahrbahnmarkierungen (15) sind.

8. Ortungseinrichtung nach Anspruch 5 oder einem der folgenden,
**dadurch gekennzeichnet,**
**dass** den Klassen die Orts- und Richtungshinweisschilder (9) sind.

9. Ortungseinrichtung nach Anspruch 5 oder einem der folgenden,
**dadurch gekennzeichnet,**
**dass** unter den Klassen die Kraftfahrzeugkennzeichen sind.

10. Ortungseinrichtung nach Anspruch 1 oder einem der folgenden,
**dadurch gekennzeichnet,**
**dass** in der Speichereinrichtung (19) eine Liste von Ortsnamen gespeichert ist.

11. Verfahren zum Betrieb einer Ortungseinrichtung gemäß Anspruch 1 oder einem der folgenden,
**dadurch gekennzeichnet,**
**dass** mit der Kamera (12) Bilder (27) Fahrumgebung erfasst werden,
durch eine Mustererkennungseinrichtung (13) den Bildern aktuelle Strukturen (14,15,16,17,18) zugeordnet werden,
die aktuellen Strukturen (14,15,16,17,18) mit gespeicherten Strukturen (20,21,22,23) verglichen werden und
jeder aktuellen Strukturen (14,15,16,17,18) wenigstens ein Ähnlichkeitswert zugeordnet wird, der die Ähnlichkeit zu einer oder mehreren der aktuellen Struktur am nächsten kommenden gespeicherten Struktur (20,21,22,23) repräsentiert und
aus den Ähnlichkeitswerten ein oder mehrere in Frage kommende geographische Bereiche ermittelt werden.

12. Verfahren nach Anspruch 11,
**dadurch gekennzeichnet,**
**dass** aus gewichteten Ähnlichkeitswerten verschiedener Strukturen ein wahrscheinlichster geographischer Bereich ermittelt wird.

13. Verfahren nach Anspruch 12,
**dadurch gekennzeichnet,**
**dass** bei der Ermittlung des wahrscheinlichsten geographischen Bereichs die Information über den zuletzt ermittelten geographischen Bereich berücksichtigt wird.
